# EUROPEAN PATENT SPECIFICATION

(11) **EP 1 608 449 B1**
(45) Date of publication and mention of the grant of the patent: **18.02.2009**
(21) Application number: 04725224.2
(22) Date of filing: 01.04.2004
(51) Int. Cl.: B01D 15/08, G01N 30/60, B01L 3/00

(54) **CHROMATOGRAPHIC SEPARATION OF SUBSTANCES CONTAINED IN A LIQUID SAMPLE**
CHROMATOGRAPHISCHE TRENNUNG VON IN EINER FLÜSSIGKEITSPROBE ENTHALTENEN SUBSTANZEN
SEPARATION CHROMATOGRAPHIQUE DE SUBSTANCES CONTENUES DANS UN ECHANTILLON DE LIQUIDE

(30) Priority: 03.04.2003 SE 0300975
(43) Date of publication of application: 28.12.2005
(73) Proprietor: Protista Biotechnology AB, 26722 Bjuv (SE)
(72) Inventor: MATTIASSON, Bo, S-245 62 Hjärup (SE); GALAEV, Igor, Yu, S-224 72 Lund (SE); HATTI KAUL, Rajni, S-224 74 Lund (SE)
(74) Representative: Karlström, Lennart
(86) International application number: PCT/SE2004/000506
(87) International publication number: WO 2004/087285

(56) References cited:
- WO-A1-99/00168
- US-A- 5 417 923

## Description

### Technical field

The present invention relates to a chromatographic separation method , a separation device and a process for the preparation of a separation medium for use therein. More particularly the present invention relates to a device and a method for the chromatographic separation of substances contained in a liquid sample and to a process for the preparation of a separation medium to be used in said method.

### Background art

Chromatographic separation of substances contained in a liquid sample by applying said sample to a separation column in which a separation medium is arranged and eluting one or more product fractions from said column belongs to the well known

### prior art.

Traditionally chromatographic separation and isolation of substances has been done by sequential application of samples on one and the same chromatographic column. However, particularly in pharmaceutical research there is a large demand for the analysis of numerous samples. In order to facilitate the parallel chromatographic processing of a plurality of samples US-A-5 417 923, issued on May 23, 1995, suggests the use of an assay tray assembly comprising a one piece test tray mounted in over-lying relationship in engagement with a collection tray, which assay tray comprises a plurality of separation "columns" in the form of chambers in which a separation medium has been arranged. Figure 1 of US-A-5 417 923 shows an assay tray consisting of 96 chambers or columns arranged in 8 rows with 12 chambers in each row. The collection tray exhibits 96 wells arranged so as to enable direct transfer of the chamber (column) effluents into the wells without intermixing or cross contamination.

The chromatographic media in the chamber is retained between underlying and overlying frits (items 31 and 32, respectively of figure 3) which usually are of a porous nature. Underlying frit 31 is retained on place by means of an annular flange 8 at the bottom end of each chamber thus providing a shoulder within the chamber 3. The liquid under test is usually pipetted into the columns in predetermined volumes. In liquid chromatography, the chromatographic column should always be filled with liquid, as the drainage of the column is detrimental for the chromatographic performance. To prevent uncontrolled column drainage, the liquid flow through the column is controlled either by applying some back pressure (which is released when the effluents are collected) or by using frits with a porosity which allows keeping the liquid inside the column due to the capillary forces. In the latter case the effluents are collected by creating artificial pressure drop above or below the column or by pushing liquid through the column due to the centrifugal forces.

C. Gottstein and R. Forde (Protein Engineering Vol. 15, No. 10, pp 775-777, 2002) disclose an affinity chromatography system for parallel purification of recombinant protein samples in which system a plurality of affinity columns (7) have been mounted in apertures in a common plate, liquid being provided to the columns by means of syringes (6), one for each column, and the flow through being collected in tubes (8). The columns (7) are filled with an affinity resin. This system allows the purification of 24 recombinant proteins in parallel.

It is an object of the present invention to provide a method for the chromatographic separation of substances contained in a liquid sample which method may be practised by using a system less complicated than those of the prior art disclosed above for the analysis of a plurality of samples in parallel.

It is another object of the present invention to provide a process for the preparation of separation media for use in a method for the chromatographic separation of substances for the analysis of a plurality of samples in parallel which separation medium enables the use of less complicated equipment than those disclosed by above cited prior art.

These and others objects are attained by means of the present invention.

### Disclosure of the invention

According to one aspect of the present invention there is provided a method for the chromatographic separation of substances contained in a liquid sample comprising
providing a one piece separation tray having a spaced array of discrete identical upstanding chambers each exhibiting an open upper end and an open lower end and a separation medium placed in at least part of each upstanding chamber;
applying a liquid sample to said open upper end of at least one of said upstanding chambers;
then applying an eluting liquid to said open upper end of said at least one of said upstanding chambers; and
collecting at least one product fraction flowing out from the open lower end of said at least one of said upstanding chambers;
wherein a monolith of a compressible macroporous gel having in its liquid-swollen, non-compressed state a cross-sectional area which is 2-15 %, preferably 4-12 % and most preferably 5-10 %, larger than the cross-sectional area of the upstanding chamber in which it is placed is used as said separation medium and is in face-to-face contact with the wall of the respective chamber in its liquid-swollen state.

In accordance with one embodiment of this aspect of the present invention the method according to the present invention may be carried out using an assay tray assembly comprising a one piece test tray removably mounted in overlying relationship in engagement with a collection tray as disclosed by US-A-5 417 923, the separation medium with underlying and overlying frits (31 and 32, respectively), however, being replaced by a rod-shaped monolith of a compressible macroporous gel as identified above.

By using as the separation medium, in accordance with the present invention, a monolith of a compressible macroporous gel which in its liquid-swollen, non-compressed state has a cross-sectional area which is somewhat larger, such as 2-15%, preferably 4-12% and most preferably 5-10% larger than the cross-sectional area of the lower part 6 of the chamber 3 of the prior art test tray, the annular flange 8 may be omitted since the monolith will be held retained on place due to the friction between the compressed gel monolith and the inner wall of the separation chamber. Thus the configuration of the assay tray is simplified. Moreover, there is no restriction in the flow area of liquid flowing out from the lower end of the separation chamber.

A further advantage afforded by the separation medium used in the method according to the present invention is that the porous nature of the monolith enables liquid to be retained therein by capillary forces thus preventing the separation medium from "running dry."

US-A-5 417 923 disclosed each chamber to be formed with a conical top opening and a cylindrical lower part. In addition to such configuration the present invention contemplates the use of a chamber with a substantially constant cross-sectional area along its length. The configuration of the chambers as having an unaltered cross-sectional area along its length considerably simplifies the manufacture of the separation tray. Moreover, although a circular cross-section of each chamber is the preferred one, any arbitrary cross-sectional configuration may be contemplated according to the present invention provided that the cross-section of the gel monolith is adapted thereto in order to obtain face-to-face contact in liquid-swollen state with the wall of the chamber within which it is placed. Thus the cross-sections of the chamber and the monolith may, for instance, form a triangle, a square, a rectangle, an oval, a pentagon, a hexagon, and so on, and may even exhibit an irregular shape.

Although US-A-5 417 923 discloses the separation media to occupy only part of the lower part of the chamber the present invention in addition contemplates the monolith to occupy fully the lower cylindrical (or other cross-sectional shape) part of the chamber or even to occupy fully the whole chamber in case of a chamber having a constant cross-sectional area along its length.

In order to avoid the necessity of applying supporting means, such as a net, for instance, at the open lower end of the upstanding chambers the monolith should exhibit a ratio between the length thereof in the longitudinal direction of the chamber and its cross-sectional dimensions exceeding a critical value below which the monolith may be bent so that the face-to-face contact with the chamber wall is lost. Thus, for instance, in case of cylindrical monoliths and chambers the length of the monolith should preferably exceed 50%, more preferably 60%, and most preferably 70% of the diameter of the monolith.

Monoliths of compressible macroporous gels to be used in the method according to the present invention can be prepared from various polymerisation systems.

Thus, according to one preferred embodiment of the method according to the present invention the monolith of a compressible macroporous gel is a cryogel that has been obtained by polymerizing a solution of one or more monomers selected from the group consisting of:
N-substituted and non-substituted (meth)acrylamides; N-alkyl substituted N-vinylamides;
hydroxyalkyl (meth)acrylates;
vinylacetate;
alkylethers of vinyl alcohol;
styrene and ring-substituted styrene derivatives;
vinyl monomers;
(meth)acrylic acid and salts thereof;
silicic acid; and
   monomers capable of forming polymers via polycondensation under freezing at a temperature below the solvent crystallization point, at which solvent in the system is partially frozen with the dissolved substances concentrated in the non-frozen fraction of solvent to the formation of a cryogel.

Details on such cryogels and the preparation thereof are found in International Patent Application No. PCT/SE02/01856 (WO 03/041830).

The solvent or solvent system used when preparing the cryogels may be selected from the group consisting of water, water-miscible organic solvents, mixtures of water and water-miscible organic solvents and mixtures of organic solvents but preferably water or a mixture of water and a water miscible organic solvent is used as solvent in combination with water-soluble monomers of the group recited above.

According to another preferred embodiment of the method according to the present invention the monolith of a compressible macroporous gel is a cryogel that has been obtained by cooling an aqueous solution of polyvinyl alcohol or at least one gel-forming polysaccharide selected from the group consisting of agarose, agar, carrageenans, starch and cellulose and their respective derivatives or a mixture of said polysaccharides to a temperature, at which the solvent in the system is partially frozen with the dissolved substances concentrated in the non-frozen fraction of the solvent to the formation of a cryogel, said cooling being carried out, when necessary, in the presence of at least one chaotropic agent in said aqueous solution in order to prevent gel formation before the polymer solution is frozen.

Details on such cryogels and the preparation thereof are found in the International Patent Application No. PCT/SE02/01857 (WO 03/031014).

In addition to the preparation of the monolith by moulding a monolith to be used in the method of the present invention may be formed by rolling or folding a sheet of a cryogel.

Moreover, in the method according to the present invention a monolith to be used therein may have been produced by a method selected from the group consisting of gel formation in double emulsion systems; freeze-drying of a polymer solution; leaching of a particulate material used as a porogen from a preformed polymer monolith; use of gas bubbles as a porogen when gel formation proceeds in foam; and aggregation of polymer particles or fibres (non-woven materials).

In addition to the methods for the preparation of macroporous gels recited above other existing methods or methods disclosed in the future resulting in macroporous compressible gels may in principle be used for the preparation of monoliths for use in the method according to the present invention.

The macroporous cryogels prepared by using the systems according to the preferred embodiments mentioned above may be modified in different ways as disclosed in PCT/SE02/01856 (WO 03/041830) and PCT/SE02/01857 (WO 03/031014).

Thus, for instance, the cryogels prepared from monomers as well as the cryogels based on polysaccharides or polyvinyl alcohol may have become cross-linked, e.g. by means of a cross-linking agent selected from the group consisting of alkylene diamines, glutaric aldehyde, di- and triglycidyl compounds and divinylsulfone in the first case and epichlorohydrin, divinyl sulfone, glutaric dialdehyde, azidobenzoyl hydrazide, 4-(N-maleimidomethyl)cyclohexane-1-carboxyl hydrazide hydrochloride, N-hydroxy-succinimidyl-4-azidosalicylic acid, 3-(2-pyridyl-dithio)-propinoyl hydrazide, dimethyladipimidate- 2HCl, N-succinimidyl-6-(4'-azido-2'-nitro-phenylamino)hexanoate and sulfosuccinimidyl-(4'-azidosalicylamido)hexanoate, di- and triglycidyl compounds in the second case.

Alternatively, or in addition thereto, the cryogel may have become modified by introducing a member selected from the group consisting of ligands, charged groups and hydrophobic groups thereinto.

According to another aspect of the present invention there is provided a separation device for use in a method according to the invention for the chromatographic separation of substances contained in a liquid sample, which separation device comprises a one piece separation tray having a spaced array of discrete identical upstanding chambers each exhibiting an open upper end and an open lower end and a separation medium placed in at least part of each upstanding chamber wherein said separation medium comprises a monolith of a compressible macroporous gel having in its liquid-swollen, non-compressed state a cross-sectional area which is 2-15 %, preferably 4-12 % and most preferably 5-10 %, larger than the cross-sectional area of the upstanding chamber in which it is placed, which monolith is in face-to-face contact with the wall of the respective chamber in its liquid-swollen state.

In its simplest embodiment the one piece separation tray comprises a plate of a rigid, inert material, such as a metal or a polymer, provided with a plurality of cylindrical bores forming the upstanding chambers therein housing the separation media.

Other possible embodiments of the one piece separation tray should be evident from the description of the method of the invention above.

Detailed description of monoliths to be used in the separation device according to the invention is found above in connection with the method of the invention and below in connection with the process for the preparation of a separation medium for use in the method of the present invention.

According to further aspect of the present invention there is provided a process for the preparation of a separation medium for use in a method according to the present invention, which process comprises
a) providing a mould of a rigid material having a plurality of apertures going therethrough, said apertures having a cross-sectional configuration adapted to that of the upstanding chambers of a separation tray in which the separation medium prepared is to be used but having a cross-sectional area which is 2-15%, preferably 4-12% and most preferably 5-10% larger than that of said upstanding chambers;
b) sealing the apertures of the mould at the bottom thereof by means of an impervious removable plate;
c) introducing a solution of substances from which cryogels may be prepared into the apertures of the mould;
d) cooling the mould with said solution within the apertures thereof at a temperature below the solvent crystallisation point at which solvent in the system is partially frozen with the dissolved substances concentrated in the non-frozen fraction of solvent to the formation of a cryogel monolith;
e) defrosting the mould with the cryogel monoliths contained therein;
f) replacing the impervious removable plate by net with openings large enough to allow free flow of liquids therethrough but small enough to prevent the cryogel monoliths formed from passing therethrough;
g) washing the monoliths using a suitable washing medium; and
h) removing the monoliths from the mould.

In accordance with an alternative of this method steps e) and f) may be carried out in reverse order.

The phrase "said apertures having a cross-sectional configuration adapted to that of the upstanding chambers" as used here and in the claims should mean, for instance, that in the case when the upstanding chambers are cylindrical in shape the apertures of the mould are also cylindrical but having somewhat wider diameter in order to attain a cross-sectional area which is somewhat larger than that of the upstanding chambers. Similarly, in case of a triangular cross-section of the upstanding chambers, the apertures of the mould would also be of triangular cross-section with angles identical to those of the upstanding chambers but having somewhat longer sides.

There is no specific restriction made on the cross-sectional configuration of the apertures of the mould and the upstanding chambers of the separation tray, as indicated previously. However, a circular cross-section is preferred from practical point of view.

The solution to be used in step c) of the process according to the present invention may be any solution previously used in the manufacture of cryogels.

In accordance with one preferred embodiment of the process according to the present invention said solution used in step c) is a solution of one or more monomers selected from the group consisting of:
N-substituted and non-substituted (meth)acrylamides; N-alkyl substituted N-vinylamides;
hydroxyalkyl (meth)acrylates;
vinylacetate;
alkylethers of vinyl alcohol;
styrene and ring-substituted styrene derivatives;
vinyl monomers;
(meth)acrylic acid and salts thereof;
silicic acid; and
   monomers capable of forming polymers via polycondensation under freezing at a temperature below the solvent crystallization point, at which solvent in the system is partially frozen with the dissolved substances concentrated in the non-frozen fraction of solvent to the formation of a cryogel.

Details on such cryogel and the preparation thereof are found in International Patent Application No. PCT/SE02/01856 (WO 03/041830).

The solvent or solvent system used when preparing the cryogels may be selected from the group consisting of water, water-miscible organic solvents, mixtures of water and water-miscible organic solvents and mixtures of organic solvents but preferably water or a mixture of water and a watermiscible organic solvent is used as solvent in combination with water-soluble monomers of the group recited above.

In accordance with another preferred embodiment of the process according to the present invention said solution used in step c) is an aqueous solution of polyvinyl alcohol or at least one gel forming polysaccharide obtained by cooling an aqueous solution of polyvinyl alcohol or at least one gel forming polysaccharide selected from the group consisting of agarose, agar, carrageenans, starch and cellulose and their respective derivatives or a mixture of said polysaccharides to a temperature, at which the solvent in the system is partially frozen with the dissolved substances concentrated in the non-frozen fraction of solvent to the formation of a cryogel said cooling being carried out, when necessary, in the presence of at least one chaotropic agent in said aqueous solution in order to prevent gel formation before the polymer solution is frozen.

Details on such cryogels and the preparation thereof are found in the International Patent Application No. PCT/SE02/01857 (WO 03/031014).

According to a modification of the process according to the present invention the cryogel monoliths formed may be subjected to one or more chemical modifications before step h), e.g. as disclosed in PCT/SE02/01856 (WO 03/41830) and PCT/SE02/01857 (WO 03/031014).

Thus, for instance, the cryogels prepared from monomers as well as the cryogels based on polysaccharides or polyvinyl alcohol may be subjected to a cross-linking reaction, e.g. by reaction with a cross-linking agent selected from the group consisting of alkylene diamines, glutaric aldehyde, di- and triglycidyl compounds and divinylsulfone in the first case and epichlorohydrin, divinyl sulfone, glutaric dialdehyde, azidobenzoyl hydrazide, 4-(N-maleimidomethyl)cy-clohexane-1-carboxyl hydrazide hydrochloride, N-hydroxy-succinimidyl-4-azidosalicylic acid, 3-(2-pyridyl-dithio)-propinoyl hydrazide, dimethyladipimidate- 2HCl, N-succini-midyl-6-(4'-azido-2'-nitro-phenylamino)hexanoate and sulfosuccinimidyl-(4'-azidosalicylamido)hexanoate, di- and triglycidyl compounds in the second case.

Alternatively, or in addition thereto, the cryogel monoliths may be modified by introducing a member selected from the group consisting of ligands, charged groups and hydrophobic groups thereinto.

Examples of ligands which may be introduced into the cryogel monoliths prepared according to the present invention are peptides, metal chelates, sugar derivatives, boronate derivatives, enzyme substrates and their analogues, enzyme inhibitors and their analogues, protein inhibitors, antibodies and fragments thereof, ligand structures obtained via combinatorial chemistry and thiol-containing substances.

Examples of charged groups which may be introduced into the cryogel monoliths prepared according to the present invention are ion exchange groups.

According to the present invention there is also provided an alternative process for the preparation of a separation medium for use in a method according to the invention, which process comprises
a) providing an elongated, tubular mould having a closed end and having a cross-sectional configuration adapted to that of the upstanding chambers of a separation tray in which the separation medium prepared is to be used but having a cross-sectional area which is 2-15%, preferably 4-12% and most preferably 5-10% larger than that of said upstanding chambers;
b) introducing a solution of substances from which cryogels may be prepared into the mould;
c) cooling the mould with said solution in it at a temperature below the solvent crystallisation point at which solvent in the system is partially frozen with the dissolved substances concentrated in the non-frozen fraction of solvent to the formation of a cryogel monolith;
d) defrosting the mould with the cryogel monolith contained therein;
e) removing the closed end of the mould;
f) washing the monolith by passing a suitable washing medium through the mould;
g) removing the monolith from the mould; and
h) cutting the monolith into pieces of a size suitable for use in an upstanding chamber of a separation tray.

Solutions to be used in this alternative process may be those already mentioned in connection with the previously discussed process and modifications to the cryogels prepared may also be performed as discussed above.

According to the present invention there is also provided a further alternative process for the preparation of a separation medium for use in the method according to the invention, which process comprises
a) extruding a solution of substances from which cryogels may be prepared directly into a cold organic medium which is a non-solvent for the solutes of said solution to the formation of a continuous string of substantially uniform cross-section in which gel formation takes place; and
b) cutting the string into pieces of a size suitable for use in an upstanding chamber of a separation tray.

Cryogel monoliths prepared according to the processes according to the present invention may be inserted at least one into each upstanding chamber of a separation tray either in liquid swollen or dried state. When inserting dried monoliths the transient use of a removable net or film under the separation tray may advantageously be applied to keep the monoliths in place. The net or film is removed and the cryogels are soaked inside the upstanding chambers before the use of the separation tray.

The method according to the present invention may, as indicated previously, be practiced using an assay tray assembly as disclosed by US-A-5 417 923 and preferably with the test tray modified as indicated above. The collection tray may also be modified in comparison with that disclosed in US-A-5 417 923 without departing from the scope of the present invention as defined in the claims. Thus, for instance, a conventional microtiter plate having wells in a number and a mutual relationship (locations) corresponding to the upstanding chambers of the separation tray may be used as the collection tray. The number of upstanding chambers of the separation tray and of the wells of the collection tray may be one of those conventionally used in microtiter plates, such as, for instance, 48, 96, 192 or 384 wells.

The invention will now be illustrated by means of a number of working examples which are for illustrative purpose only and not intend as limitations.

### Example 1. Production of cryogel monoliths and separation tray

Dimethylacrylamide (DMAA; 1.85 ml purified from stabilisator on an aluminium oxide column) and N,N'-methylenebis(acrylamide) (MBAAm; 0.663 g) were dissolved in 40 ml of deionized water. Then 0.243 ml of allyl glycidyl ester (AGE ) was added to the mixture at continuous stirring and the volume was adjusted to 50 ml with deionized water. The mixture was degassed under vacuum for 10-15 min to eliminate dissolved oxygen. Free radical polymerization was initiated by N,N,N',N'-tetra-methyl-ethylenediamine (TEMED) and ammonium persulfate (APS). After addition of TEMED (31.25 µl) the solution was cooled in an ice bath for 15 min. A freshly prepared solution of APS was added (final amount of APS in the reaction mixture 26.3 mg) and the mixture was stirred gently for 1 min. Then 0.5 ml of the reaction mixture was added very quickly into each well (diameter 7.1 mm) of a metal microtiter plate mold with 96 wells (the pipette tips used for the filling of the mold with a multichannel pipette and the mold was cooled at -12° C prior to the filling). The metal plate has 96 cylindrical holes having a diameter of 7,1 mm drilled all through the material. The plate was placed on a metal plate making the bottom tight so that when filling in the solution it stays at the bottom of the hole, where the gel is formed. The solution in the microtiter plate mold was frozen within 10 min in the ARCTEST cooling chamber at -12° C. The samples were kept frozen at -12° C over night and then thawed at room temperature. The metal plate sealing the mould at the bottom thereof was replaced by a wire net. The cryogel matrix was then washed by passing 10 ml of deionized water through each well. Then the cryogels were transferred from the metal 96-well mold into a plastic microtiter plate developed for chromatography applications (microtiter plate with 96 bottomless round wells, well volume of 1.5 ml, well diameter 6.9 mm). After filling with the monolith each well has about 1 ml dead volume above the monolith. The microtiter plate with the monoliths contained in the wells thereof constitutes a separation tray for use in a method according to the invention

### Example 2. Coupling of Cu2+ IDA ligand to the cryogels monoliths in the separation tray,

Four ml of 0.5 M Na2CO3 solution were passed through each well packed with cryogel monolith (0.5 ml) of a separation tray as disclosed in Example 1. Then each well was equilibrated with 0.5 M IDA in 1.0 M Na2CO3, pH 10.0. Finally, the microplate with the cryogel monoliths was placed into a vessel containing 400 ml of 0.5 M IDA in 1.0 M Na2CO3, pH 10.0 and was incubated overnight at room temperature and gentle shaking. The modified cryogels in the microplate were washed with water until pH became neutral. Cu2+ was bound to the IDA-cryogels by passing 2 ml of 0.5 M CuSO4 (dissolved in distilled water) through each well. Finally, each well was washed with water and equilibrated with 20 mM HEPES, 0.2 M NaCl pH 7.0.

### Example 3. Chromatography of lysozyme on Cu2+-IDA cryogel separation tray

Different amounts of lysozyme (25, 50, 75, 100, 125, 150, 175, 200 and 250 µg) dissolved in 0,5 ml 20 mM HEPES, 0,2 M NaCl, pH 7,0, were applied to Cu2+ IDA cryogel monoliths in the different wells of the separation tray prepared as disclosed in Example 2. The monoliths were preequilibrated with 20 mM HEPES, 0.2 M NaCl pH 7.0 (running buffer). After the adsorption stage each analyzed well was washed with 2 ml of the running buffer. Bound lysozyme was eluted with 2.5 ml of 0.2 M imidazole in the running buffer. The chromatography with each lysozyme concentration was performed on 5 randomly selected wells. (Table 1). The average deviation between different wells was 6-8 %.

**Table 1. The dependence of the amount of recovered lysozyme on the amount of lysozyme applied to Cu2+ IDA cryogel monoliths**

| | | | | | | | | | |
|---|---|---|---|---|---|---|---|---|---|
| Applied lysozyme, µg | 0 | 50 | 75 | 100 | 125 | 150 | 175 | 200 | 250 |
| Bound lysozyme, µg | 0 | 10 | 28 | 40 | 55 | 80 | 107 | 115 | 116 |

The kinetics of lysozyme recovery is presented in Table 2 when 25 µg lysozyme was applied on randomly selected wells.

**Table 2. The kinetics lysozyme on the amount of lysozyme recovery from Cu2+ IDA cryogel monoliths**

| | | | | | |
|---|---|---|---|---|---|
| Time, min | 0 | 10 | 20 | 40 | 80 |
| Recovered Lysozyme, % | 72 | 80 | 92 | 92 | 96 |

### Example 4. Direct quantification of lactate dehydrogenase from crude homogenate using monolith separation trays

Different amounts of E. coli cell homogenate containing histidine (His6)-tagged lactate dehydrogenase (LDH) were applied to the Cu2+ IDA cryogel monoliths in the different wells (0.5 ml) of a separation tray according to Example 2 equilibrated with 0.2 M TRIS buffer pH 7.3 (buffer A). After 5 min incubation the wells were washed with the same buffer to remove unbound protein and cell debris. Then the reaction mixture ( 0.5 ml buffer A containing 0.45 mM NADH and 2.0 mM pyruvate) was added and incubated within the wells for 2 min. After incubation the reaction mixture was "pushed out" from the wells by adding 0.5 ml of buffer A and analysed by measuring absorbance at 340 nm. In the control experiment buffer A was used instead of cell homogenate. ΔA340 is the difference between the obtained values of absorbance at 340 nm in the reaction mixtures from control and homogenate-loaded wells. Each homogenate load was analysed on 5 different randomly chosen wells. ΔA340 increased with increasing amount of homogenate applied allowing direct estimation of the amount of LDH present in the sample. Average deviation of the experiment was 7.5 %.

### Example 5. Production of monolithic cryogel from polyvinyl alcohol (monolithic cryoPVA) and separation tray

Aqueous solution (5 % w/v) of polyvinyl alcohol (PVA, molecular weight 67 000, degree of hydrolysis 87.7 %) was prepared and pH was adjusted to 1.0 with 5 M HCl. The solution was cooled in an ice bath for 10 min. The cross-linker glutaraldehyde (0.5 % w/v) was added and the reaction mixture was stirred for 1 min. Then 0.5 ml of the solution was added very quickly into each well (diameter 7.1 mm) of a metal microtiter plate mold with 96 wells (the pipette tips used for the filling of the mold with a multichannel pipette and the mold were cooled at -15° C prior to the filling). The metal plate has 96 cylindrical holes having a diameter of 7,1 mm drilled all through the material. The plate is connected to a metal plate making the bottom tight so that when filling in the solution it stays at the bottom of the hole, where the gel is formed. The solution in the microtiter plate mold was frozen within 10 min in the ARCTEST cooling chamber at -15 °C. The samples were kept frozen at -15 °C over night and then thawed at room temperature. The metal plate sealing the mould at the bottom thereof was replaced by a wire net. The cryogel matrix was then washed by passing 5 ml of deionized water through each well. Then the cryogels were transferred from the metal 96-well mold into a plastic microtiter plate developed for chromatography applications (microtiter plate with 96 bottomless round wells, well volume of 1.5 ml, well diameter 6.9 mm). After filling with the monolith each well has about 1 ml dead volume above the monolith. The microtiter plate with the monoliths contained in the wells thereof constitutes a separation tray for use in a method according to the invention.

### Example 6. Coupling of functional epoxy-groups to the monolithic cryoPVA in a separation tray

A separation tray with monolithic cryoPVA was prepared according to Example 5. Deionized water (5 ml) followed by 5 ml of 0.1 M NaOH were passed through each well. An epichlorohydrin emulsion in 0.5 M NaOH (2 %, v/v) was applied to the column in recycle mode for 48 hr. Finally, wells packed with epoxy-containing monolithic cryoPVA were washed with deionized water until pH became less than 7.

### Example 7. Production of ion-exchange monolithic cryoPVA in a separation tray

A separation tray with epoxy-containing monolithic cryoPVA was prepared according to Example 6. Deionized water (5ml) followed by 5 ml of 0.1 M Na-carbonate buffer, pH 9.5 were passed through each well packed with epoxy-containing monolithic cryoPVA (0.5 ml). A solution of 3-dimethylaminopropylamine in 0.1 M Na-carbonate buffer, pH 9.5 was applied in recycle mode for 24 hr. Finally, wells packed with ion-exchange monolithic cryoPVA were washed with deionized water until pH became less than 7.

### Example 8. Production of rolled cryogel from acrylamide

Acrylamide (AAm, 3.76 g) and 1.62 g of N,N'-methylenebis(acrylamide) (MBAAm) were dissolved in 80 ml water. The total volume was adjusted to 100 ml with deionized water. The mixture was degassed under vacuum for 10-12 min to eliminate dissolved oxygen. Free radical polymerization was initiated by N,N,N',N'-tetra-methyl-ethylenediamine (TEMED) and ammonium persulfate (APS). After addition of TEMED (63 µl) the solution was cooled in an ice bath for 20 min. A freshly prepared solution of APS (48 mg in 0.5 ml water) was added and the mixture was stirred for 1 min. Then the reaction mixture was poured in metallic round shape mould (height of the mould 1 cm and diameter 10 cm) on half of the mould height (i.e. 0.5 cm). The surface of the reaction mixture was covered with light plastic lid. The mixture was frozen at - 18°C for about 16-19 min. The frozen sample was stored at - 18°C overnight. After thawing the cryogel sheet was washed with deionized water. The round shaped cryogel sheet was put on a smooth surface and a rectangular 8 cm x 7 cm was cut. Then the free water was squeezed out lightly from the square shaped cryogel sheet. The cryogel sheet was rolled and placed into a glass tube with diameter 1.9 cm. The height of the cryogel column was 8 cm and the volume was 20 ml (1.4 times less then the total volume of the cryogel sheet, 28 ml). Compressing of the cryogel column diameter was important to avoid any space in rolled sheet, especially in the middle of the rolled sheet. The glass column was fitted with adapters and was connected to a pump. Na2CO3 (0.5 M, 200 ml) was passed through the column at a flow rate of 1 ml/min. The solution of iminodiacetic acid (0.5 M in 1.0 M Na2CO3) was applied to the column at a flow rate of 2 ml/min in recycle mode for 24 hr. After that the column was washed with deionized water (until pH became neutral). Cu2+ was bound to the IDA-cryogel column by passing 100 ml of 0.2 M CuSO4 through the column 100 ml of 0.2 M CuSO4 through the column followed by washing with water.

### Example 9. Immobilization of concanavalin A on epoxy-activated cryogel monoliths in a separation tray

Ten epoxy-activated cryogel monoliths (0.5 ml) were placed into a separation tray prepared according to Example 6. Two ml of 0.05 M carbonate buffer pH 9.0 containing 1 M NaCl, 1 mM CaCl2, 1 mM MgCl2 (buffer A) were passed through each monolith followed by application of 0.5 ml of concanavalin A (ConA) solution (4 mg/ml) in buffer A. Then the monoliths were placed into a vial containing 12 ml of ConA solution (4 mg/ml) in buffer A. The incubation was carried out at room temperature for 20 hours at continuous shaking. Unreacted epoxy groups were blocked by incubating the cryogels with 14 ml of 0.1 M ethanolamine in buffer A for 2 hours at room temperature using a shaker. Finally, the modified cryogels were placed into the separation tray and washed with 0.1 M acetate buffer pH 6.5 containing 0.5 M NaCl, 1 mM CaCl2, 1 mM MgCl2 (buffer B). ConA cryogels were kept at +4° C in buffer B.

### Example 10. Direct quantification of yeast cells by their metabolic activity using ConA-cryogel monolith separation tray

Yeast cells were suspended in 0.95 mM CaCl2, 5.56 mM KCl, 137 mM NaCl, 0.8 mM KH2PO4, 0.41 mM NaHCO3 and 0.01 mM TRIS pH 7.4 (buffer D). Different amounts of yeast cells were applied to the wells packed with ConA-cryogel monoliths (0.5 ml) equilibrated with buffer D in the wells of a separation tray prepared according to Example 9. After 10 min incubation the wells were washed with 1.5 ml of buffer D to remove unbound cells. Then the wells were incubated for 3 hours with 0.5 ml glucose (50 mM) solution in buffer D containing neutral red (0.2 mg/ml). Then the reaction liquid was displaced with 1 ml of deionized water and analyzed by measuring absorbance at 528 nm (Table 3). Absorbance at 528 nm of a solution containing neutral red changes linearly with pH. Yeast cell metabolism involves production of protons and results in decrease of pH of the medium. Change in absorbance at 528 nm in the medium containing yeast cells, glucose and neutral red allows calculation of change in metabolic activity which is proportional to the number of immobilized viable cells.

**Table 3. Change in absorbance caused when different amounts of yeast cells were bound to randomly selected wells packed with ConA-monoliths. Amount of cells is expressed in units of turbidity measured as a difference adsorbance at 600 nm between applied and eluted).**

| | | | | | | |
|---|---|---|---|---|---|---|
| Relative cell number | 0 | 0.031 | 0.102 | 0.232 | 0.339 | 0.418 |
| ΔA528 | 0.744 | 1.130 | 1.623 | 2.243 | 2.804 | 2.920 |

### Example 11. A competitive binding assay of carbohydrates and glycoenzyme using cona-cryogel separation trays

The binding capacity of the immobilized ConA was estimated by applying different amounts of pure glycoenzyme, horse radish peroxidase, to ConA-cryogel monoliths of a separation tray prepared according to Example 9 equilibrated with 0.1 M TRIS buffer pH 7.0 containing 1 mM MgCl2 and 1 mM CaCl2 (buffer E). After the adsorption stage the monoliths were washed with 2 ml of buffer E containing 1 M NaCl to remove unspecifically bound peroxidase. The amount of bound protein was determined by calculating the difference between the amount of applied and unbound protein (Table 4).

**Table 4. Binding of horse-radish peroxidase. to randomly selected wells packed with Con-A cryogel monoliths .**

| | | | | | | | | | | |
|---|---|---|---|---|---|---|---|---|---|---|
| Applied peroxi- dase, µg | 0 | 12 | 25 | 37 | 50 | 75 | 123 | 196 | 294 | 392 |
| Bound peroxi- dase, µg | 0 | 6 | 12 | 13 | 14 | 19 | 25 | 31 | 32 | 31 |

A competitive binding assay (Table 5) was performed as follows: To 0.5 ml of a glucose containing sample 15 µl of peroxidase solution containing 6 µg of enzyme was added. Samples containing different amounts of glucose and 6 µg of peroxidase were applied to randomly selected wells packed with ConA-cryogel monoliths. After 5 min incubation the wells were washed with buffer C containing 1 M NaCl. Then 0.5 ml of substrate solution (o-phenylenediamine dihydrochloride) was added and left within the wells for 10 min. The reaction mixture was displaced by adding 0.5 ml of buffer E and analyzed by measuring absorbance at 520 nm.

**Table 5 Competitive binding assay for glucose. Relative inhibition value (residual peroxidase activity) is given as a function of glucose concentration.**

| | | | | | | | | | | |
|---|---|---|---|---|---|---|---|---|---|---|
| Peroxidase ac tivity, % | 6 | 8 | 16 | 32 | 45 | 50 | 60 | 70 | 80 | 100 |
| Glucose concentration, mM | 100 | 90 | 72 | 60 | 50 | 41 | 33 | 23 | 19 | 19 |

## Claims

1. Method for the chromatographic separation of substances contained in a liquid sample comprising
providing a one piece separation tray having a spaced array of discrete identical upstanding chambers each exhibiting an open upper end and an open lower end and a separation medium placed in at least part of each upstanding chamber;
applying a liquid sample to said open upper end of at least one of said upstanding chambers;
then applying an eluting liquid to said open upper end of said at least one of said upstanding chambers; and
collecting at least one product fraction flowing out from the open lower end of said at least one of said upstanding chambers;
wherein a monolith of a compressible macroporous gel having in its liquid-swollen, non-compressed state a cross-sectional area which is 2-15 %, preferably 4-12 % and most preferably 5-10 %, larger than the cross-sectional area of the upstanding chamber in which it is placed is used as said separation medium and is in face-to-face contact with the wall of the respective chamber in its liquid-swollen state.

2. Method according to claim 1, wherein the monolith of a compressible macroporous gel is a cryogel that has been obtained by polymerizing a solution of one or more monomers selected from the group consisting of:
N-substituted and non-substituted (meth)acrylamides;
N-alkyl substituted N-vinylamides;
hydroxyalkyl (meth)acrylates;
vinylacetate;
alkylethers of vinyl alcohol;
styrene and ring-substituted styrene derivatives;
vinyl monomers;
(meth)acrylic acid and salts thereof;
silicic acid; and
monomers capable of forming polymers via polycondensation under freezing at a temperature below the solvent crystallization point, at which solvent in the system is partially frozen with the dissolved substances concentrated in the non-frozen fraction of solvent to the formation of a cryogel.

3. Method according to claim 1, wherein the monolith of a compressible macroporous gel is a cryogel that has been obtained by cooling an aqueous solution of polyvinyl alcohol or at least one gel forming polysaccharide selected from the group consisting of agarose, agar, carrageenans, starch and cellulose and their respective derivatives or a mixture of said polysaccharides to a temperature, at which the solvent in the system is partially frozen with the dissolved substances concentrated in the non-frozen fraction of the solvent to the formation of a cryogel, said cooling being carried out, when necessary, in the presence of at least one chaotropic agent in said aqueous solution in order to prevent gel formation before the polymer solution is frozen.

4. Method according to any of claims 2 and 3, wherein the polymer and polysaccharide, respectively, has become cross-linked.

5. Method according to any of claims 2 to 4, wherein the polymer and polysaccharide, respectively, has become modified by introducing a member selected from the group consisting a ligands, charged groups and hydrophobic groups thereinto.

6. Method according to any of claims 2 to 5, wherein the monolith has been formed by rolling or folding a sheet of a cryogel.

7. Method according to claim 1, wherein the monolith of a compressible macropouros gel has been produced by a method selected from the group consisting of
gel formation in double emulsion systems;
freeze-drying of a polymer solution;
leaching of a particulate material used as a porogen from a preformed polymer monolith;
use of gas bubbles as a porogen when gel formation proceeds in foam; and
aggregation of polymer particles or fibres (non-woven materials).

8. A separation device for use in a method for the chromatographic separation of substances contained in a liquid sample according to claim 1, which separation device comprises a one piece separation tray having a spaced array of discrete identical upstanding chambers each exhibiting an open upper end and an open lower end and a separation medium placed in at least part of each upstanding chamber wherein
said separation medium comprises a monolith of a compressible macroporous gel having in its liquid-swollen, non-compressed state a cross-sectional area which is 2-15 %, preferably 4-12 % and most preferably 5-10 %, larger than the cross-sectional area of the upstanding chamber in which it is placed, which monolith is in face-to-face contact with the wall of the respective chamber in its liquid-swollen state.

9. A separation device according to claim 8, wherein the monolith is as defined in any of claims 2 to 7.

10. Process for the preparation of a separation medium for use in a method as claimed in any of claims 1 to 5, which process comprises
a) providing a mould of a rigid material having a plurality of apertures going therethrough, said apertures having a cross-sectional configuration adapted to that of the upstanding chambers of a separation tray in which the separation medium prepared is to be used but having a cross-sectional area which is 2-15%, preferably 4-12% and most preferably 5-10% larger than that of said upstanding chambers;
b) sealing the apertures of the mould at the bottom thereof by means of an impervious removable plate;
c) introducing a solution of substances from which cryogels may be prepared into the apertures of the mould;
d) cooling the mould with said solution within the apertures thereof at a temperature below the solvent crystallisation point at which solvent in the system is partially frozen with the dissolved substances concentrated in the non-frozen fraction of solvent to the formation of a cryogel monolith;
e) defrosting the mould with the cryogel monoliths contained therein;
f) replacing the impervious removable plate by net with openings large enough to allow free flow of liquids therethrough but small enough to prevent the cryogel monoliths formed from passing therethrough;
g) washing the monoliths using a suitable washing medium; and
h) removing the monoliths from the mould.

11. Process according to claim 10, wherein steps e) and f) are carried out in reverse order.

12. Process according to any of claims 10 and 11, wherein said solution used in step c) is a solution of one or more monomers selected from the group consisting of:
N-substituted and non-substituted (meth)acrylamides;
N-alkyl substituted N-vinylamides;
hydroxyalkyl (meth)acrylates;
vinylacetate;
alkylethers of vinyl alcohol;
styrene and ring-substituted styrene derivatives;
vinyl monomers;
(meth)acrylic acid and salts thereof;
silicic acid; and monomers capable of forming polymers via polycondensation

13. Process according to any of claims 10 and 11, wherein said solution used in step c) is an aqueous solution of polyvinyl alcohol or of at least one gel-forming polysaccharide selected from the group consisting of agarose, agar, carrageenans, starch and cellulose and their respective derivatives or a mixture of said polysaccharides in the presence, when necessary, of at least one chaotropic agent in said aqueous solution in order to prevent gel formation before the polymer solution is frozen.

14. Process according to any of claims 10 to 13, wherein the cryogel monoliths are subjected to one or more chemical modifications before step h).

15. Process according to claim 14, wherein the cryogel monoliths are subjected to a cross-linking reaction.

16. Process according to claim 14, wherein the cryogel monoliths are modified by introducing a member selected from the group consisting of ligands, charged groups and hydrophobic groups thereinto.

17. Process for the preparation of a separation medium for use in a method as claimed in any of claims 1 to 5, which process comprises
a) providing an elongated, tubular mould having a closed end and having a cross-sectional configuration adapted to that of the upstanding chambers of a separation tray in which the separation medium prepared is to be used but having a cross-sectional area which is 2-15%, preferably 4-12% and most preferably 5-10% larger than that of said upstanding chambers;
b) introducing a solution of substances from which cryogels may be prepared into the mould;
c) cooling the mould with said solution in it at a temperature below the solvent crystallisation point at which solvent in the system is partially frozen with the dissolved substances concentrated in the non-frozen fraction of solvent to the formation of a cryogel monolith;
d) defrosting the mould with the cryogel monolith contained therein;
e) removing the closed end of the mould;
f) washing the monolith by passing a suitable washing medium through the mould;
g) removing the monolith from the mould; and
h) cutting the monolith into pieces of a size suitable for use in an upstanding chamber of a separation tray.

18. Process for the preparation of a separation medium for use in a method as claimed in any of claims 1 to 5, which process comprises
a) extruding a solution of substances from which cryogels may be prepared directly into a cold organic medium which is a non-solvent for the solutes of said solution to the formation of a continuous string of substantially uniform cross-section in which gel formation takes place; and
b) cutting the string into pieces of a size suitable for use in an upstanding chamber of a separation tray.

## Patentansprüche

1. Verfahren zur chromatographischen Trennung von Substanzen, die in einer Flüssigkeitsprobe enthalten sind, umfassend
Bereitstellen einer einteiligen Trennvorrichtung [separation tray], welche eine beabstandete Anordnung von separaten identischen aufrechten Kammern aufweist, von denen jede ein offenes oberes Ende und ein offenes unteres Ende aufweist und eines Trennmediums, welches mindestens in einem Teil jeder aufrechten Kammer angeordnet ist;
Aufgeben einer Flüssigkeitsprobe auf das offene obere Ende von mindestens einer der aufrechten Kammern;
dann Aufgeben einer Eluationsflüssigkeit auf das offene obere Ende der mindestens einen der aufrechten Kammern; und
Sammeln mindestens einer Produktfraktion, welche aus dem offenen unteren Ende der mindestens einen der aufrechten Kammern herausfliesst;
wobei ein Monolith aus einem komprimierbaren makroporösen Gel, welcher in seinem Flüssigkeits-gequollenen, nicht komprimierten Zustand eine Querschnittsfläche aufweist, die 2-15%, vorzugsweise 4-12% und höchst bevorzugt 5-10% größer ist als die Querschnittsfläche der aufrechten Kammer, in der es angeordnet wird, als Trennmedium verwendet wird und welcher sich in seinem Flüsigkeits-gequollenen Zustand in direktem Kontakt [face-to-face contact] mit der Wand der jeweiligen Kammer befindet.

2. Verfahren nach Anspruch 1, wobei der Monolith aus einem komprimierbaren makroporösen Gel ein Kryogel ist, das durch Polymerisation einer Lösung aus einem oder mehreren Monomeren erhalten wurde, welche ausgewählt sind aus der Gruppe von:
N-substituierten und nicht substituierten
(Meth)acrylamiden;
N-alkyl-substituierten N-Vinylamiden;
Hydroxyalkyl-(meth)acrylaten;
Vinylacetaten;
Alkylethern von Vinylalkohol;
Styrolen und ring-substituierten Styrolderivaten; Vinylmonomeren;
(Meth)acrylsäure und Salzen davon;
Kieselsäure und
Monomeren, die zur Ausbildung von Polymeren durch Polykondensation bei Einfrieren auf eine Temperatur unterhalb des Kristallisationspunktes des Lösungsmittels, bei welcher das Lösungsmittel im System teilweise eingefroren ist, in der Lage sind, wobei die gelösten Substanzen in der nicht-gefroreren Fraktion des Lösungsmittels konzentriert sind, zur Ausbildung eines Kryogels.

3. Verfahren nach Anspruch 1, wobei der Monolith aus einem komprimierbaren makroporösen Gel ein Kryogel ist, das durch Abkühlen einer wässrigen Lösung von Polyvinylalkohol oder mindestens eines gelbildenden Polysaccharids erhalten wurde, ausgewählt aus der Gruppe bestehend aus Agarose, Agar, Karrageenen, Stärke und Cellulose und ihren jeweiligen Derivaten oder einer Mischung dieser Polysaccharide, auf eine Temperatur, bei welcher das Lösungsmittel in dem System teilweise gefroren ist, wobei die gelösten Substanzen in der nicht-gefrorenen Fraktion des Lösungsmittels konzentriert sind, zur Ausbildung eines Kryogels, wobei das Abkühlen falls notwendig in Gegenwart mindestens eines chaotropischen Mittels in der wässrigen Lösung durchgeführt wird, um die Gelbildung zu verhindern, bevor die Polymerlösung gefroren ist.

4. Verfahren nach einem der Ansprüche 2 und 3, wobei das Polymer beziehungsweise das Polysaccharid vernetzt wurde.

5. Verfahren nach einem der Ansprüche 2 bis 4, wobei das Polymer beziehungsweise Polysaccharid durch Einführung einer Baugruppe modifiziert wurde, welche ausgewählt ist aus der Gruppe bestehend aus Liganden, geladenen Gruppen und hydrophoben Gruppen.

6. Verfahren nach einem der Ansprüche 2 bis 5, wobei der Monolith durch Rollen oder Falten eines Kryogelblattes ausgebildet wurde.

7. Verfahren nach Anspruch 1, wobei der Monolith aus einem komprimierbaren makroporösen Gel durch ein Verfahren hergestellt wurde, welches aus der Gruppe ausgewählt ist, welche aus
Gelbildung in Doppelemulsionsystemen;
Gefriertrocknung einer Polymerlösung;
Auswaschen eines partikulären Materials, welches als Porogen verwendet wurde aus einem vorgeformten Polymermonolithen;
Verwendung von Gasblasen als ein Porogen, wenn die Gelbildung in einem Schaum stattfindet und
Aggregation von Polymerpartikeln oder -fasern (nichtgewebtes Material), besteht.

8. Trenneinheit zur Verwendung in einem Verfahren nach Anspruch 1 für die chromatographische Trennung von Substanzen, welche in einer Flüssigkeitsprobe enthalten sind, wobei die Trenneinheit eine einteilige Trennvorrichtung [separation tray] umfasst, welche eine beabstandete Anordnung von separaten identischen aufrechten Kammern aufweist, von denen jede ein offenes oberes Ende und ein offenes unteres Ende aufweist und ein Trennmedium, welches in mindestens einem Teil jeder aufrechten Kammer angeordnet ist, wobei das Trennmedium einen Monolithen aus einem komprimierbaren makroporösen Gel umfasst, welcher in seinem Flüssigkeits-gequollenen, nicht komprimierten Zustand eine Querschnittsfläche aufweist, die 2-15%, vorzugsweise 4-12% und höchst bevorzugt 5-10% größer ist als die Querschnittsfläche der aufrechten Kammer, in der er angeordnet ist, und wobei der Monolith sich in seinem Flüsigkeits-gequollenen Zustand in direktem Kontakt [face-to-face contact] mit der Wand der jeweiligen Kammer befindet.

9. Trenneinheit nach Anspruch 8, wobei der Monolith wie in einem der Ansprüche 2 bis 7 definiert ist.

10. Verfahren zur Herstellung eines Trennmediums für die Verwendung in einem Verfahren wie in einem der Ansprüche 1 bis 5 beansprucht, wobei das Verfahren umfasst:
a) Bereitstellen einer Form aus einem starren Material mit einer Vielzahl von durchgängigen Aperturen, wobei die Aperturen eine Querschnittsanordnung aufweisen, die an die der aufrechten Kammern der Trennvorrichtung angepasst ist, in der das hergestellte Trennmedium verwendet wird, aber eine Querschnittsfläche aufweisen, die 2-15%, vorzugsweise 4-12% und höchst bevorzugt 5-10% größer ist als die der aufrechten Kammern;
b) Verschließen der Aperturen der Form an deren Boden mittels einer undurchlässigen entfernbaren Platte;
c) Einführen einer Lösung von Substanzen, aus denen Kryogele hergestellt werden können, in die Aperturen der Form;
d) Abkühlen der Form mit der Lösung in deren Aperturen auf eine Temperatur unterhalb des Kristallisationspunktes des Lösungsmittels, bei der das Lösungsmittel im System teilweise gefroren ist, wobei die gelösten Substanzen in der nicht-gefrorenen Fraktion konzentriert sind zur Ausbildung eines Kryogelmonolithen;
e) Auftauen der Form mit den darin enthaltenen Kryogelmonolithen;
f) Ersetzen der undurchlässigen entfernbaren Platte durch ein Netz mit Öffnungen, welche groß genug sind, um freien Durchfluss von Flüssigkeiten zu erlauben, aber klein genug, um den Durchtritt der ausgeformten Kryogelmonolithe zu verhindern;
g) Waschen der Monolithen unter Verwendung eines geeigneten Waschmediums und
h) Entfernen der Monolithen aus der Form.

11. Verfahren nach Anspruch 10, wobei die Schritte e) und f) in umgekehrter Reihenfolge ausgeführt werden.

12. Verfahren nach einem der Ansprüche 10 oder 11, wobei die Lösung, welche in Schritt c) verwendet wird, eine Lösung aus einem oder mehreren Monomeren ist, welche aus der Gruppe, bestehend aus
N-substituierten und nicht substituierten
(Meth)acrylamiden;
N-alkyl-substituierten N-Vinylamide;
Hydroxyalkyl-(meth)acrylaten;
Vinylacetaten;
Alkylethern von Vinylalkohol;
Styrolen und ring-substituierten Styrolderivaten; Vinylmonomeren;
(Meth)acrylsäure und Salzen davon;
Kieselsäure und
Monomeren, die zur Ausbildung von Polymeren durch Polykondensation in der Lage sind, ausgewählt sind.

13. Verfahren nach einem der Ansprüche 10 oder 11, wobei die in Schritt c) eingesetzte Lösung eine wässrige Lösung aus Polyvinylalkohol oder aus mindestens einem gelbildenden Polysaccharid ist, ausgewählt aus der Gruppe bestehend aus Agarose, Agar, Karrageenen, Stärke und Cellulose und ihren jeweiligen Derivaten oder eine Mischung dieser Polysaccharide, sofern notwendig, in Gegenwart mindestens eines chaotropischen Mittels in der wässrigen Lösung, um Gelbildung zu verhindern, bevor die Polymerlösung gefroren ist.

14. Verfahren nach einem der Ansprüche 10 bis 13, wobei die Kryogelmonolithe einer oder mehreren chemischen Modifikationen vor dem Schritt h) unterzogen werden.

15. Verfahren nach Anspruch 14, wobei die Kryogelmonolithen einer Vernetzungsreaktion unterzogen werden.

16. Verfahren nach Anspruch 14, wobei die Kryogelmonolithen durch Einbringung einer Bauggruppe, ausgewählt aus der Gruppe bestehend aus Liganden, geladenen Gruppen und hydrophoben Gruppen modifiziert werden.

17. Verfahren zur Herstellung eines Trennmediums für die Verwendung in einem Verfahren wie in einem der Ansprüche 1 bis 5 beansprucht, wobei das Verfahren umfasst
a) Bereitstellen einer verlängerten [elongated] Rohrform, die ein geschlossenes Ende aufweist und eine Querschnitts-Anordnung aufweist, welche angepasst ist an die der aufrechten Kammern einer Trennvorrichtung, in der das hergestellte Trennmedium verwendet wird, aber eine Querschnittsfläche aufweist, welche 2-15%, vorzugsweise 4-12%, höchst bevorzugt 5-10% größer ist als die der aufrechten Kammern;
b) Einbringen einer Lösung von Substanzen, aus denen Kryogele ausgeformt werden können, in die Form;
c) Abkühlen der Form mit der Lösung darin auf eine Temperatur unterhalb des Kristallisationspunktes des Lösungsmittels, bei der das Lösungsmittel im System teilweise gefroren ist, wobei die gelösten Substanzen in der nicht-gefrorenen Fraktion des Lösungsmittels konzentriert sind, zur Ausbildung eines Kryogelmonolithen;
d) Auftauen der Form mit dem darin enthaltenen Kryogelmonolithen;
e) Entfernen des geschlossenen Endes der Form;
f) Waschen des Monolithen durch Durchführen [passing] eines geeigneten Waschmediums durch die Form;
g) Entfernen des Monolithen aus der Form und
h) Schneiden des Monolithen in Stücke einer Größe, welche für die Verwendung in einer aufrechten Kammer einer Trennvorrichtung geeignet ist.

18. Verfahren zur Herstellung eines Trennmediums für die Verwendung in einem Verfahren wie einem der Ansprüche 1 bis 5 beansprucht, wobei das Verfahren umfasst
a) Extrusion einer Lösung von Substanzen, aus denen Kryogele hergestellt werden können, direkt in ein kaltes organisches Medium, welches ein Nicht-Lösungsmittel für die gelösten Stoffe der Lösung ist zur Ausbildung eines kontinuierlichen Stranges mit im Wesentlichen einheitlichem Querschnitt, wobei die Gelbildung stattfindet und
b) Schneiden des Stranges in Stücke einer Größe, welche für die Verwendung in einer aufrechten Kammer einer Trennvorrichtung geeignet ist.

## Revendications

1. Méthode pour la séparation chromatographique de substances contenues dans un échantillon liquide, comprenant les étapes consistant à:
se procurer un plateau de séparation d'une seule pièce ayant un réseau espacé de chambres droites, identiques, distinctes, présentant chacune une extrémité supérieure ouverte et une extrémité inférieure ouverte, et un milieu de séparation placé dans au moins une partie de chaque chambre droite;
déposer un échantillon liquide sur ladite extrémité supérieure ouverte de l'une au moins desdites chambres droites;
ensuite, déposer un liquide d'élution sur ladite extrémité supérieure ouverte de ladite au moins une desdites chambres droites; et
collecter au moins une fraction de produit s'écoulant de l'extrémité inférieure ouverte de ladite au moins une desdites chambres droites;
où un monolithe d'un gel macroporeux compressible ayant, dans son état non compressé, gonflé au liquide, une aire de section transversale qui est de 2-15 %, de préférence, 4-12 %, et plus préférablement, 5-10 %, plus grande que l'aire de section transversale de la chambre droite dans laquelle il est placé, est utilisé en tant que ledit milieu de séparation et est en contact face-à-face avec la paroi de la chambre respective dans son état gonflé au liquide.

2. Méthode selon la revendication 1, dans laquelle le monolithe d'un gel macroporeux compressible est un cryogel qui a été obtenu par polymérisation d'une solution d'un ou de plusieurs monomères choisis dans le groupe constitué par:
les (méth)acrylamides N-substitués et non substitués;
les N-vinylamides N-alkyl-substitués;
les (méth)acrylates d'hydroxyalkyle;
l'acétate de vinyle;
les éthers alkyliques d'alcool de vinyle;
le styrène et les dérivés de styrène à substitution cyclique;
les monomères vinyliques;
l'acide (méth)acrylique et ses sels;
l'acide silicique; et
les monomères capables de former des polymères par polycondensation sous congélation à une température en dessous du point de cristallisation du solvant, à laquelle le solvant présent dans le système est partiellement congelé avec les substances dissoutes concentrées dans la fraction non congelée du solvant jusqu'à la formation d'un cryogel.

3. Méthode selon la revendication 1, dans laquelle le monolithe d'un gel macroporeux compressible est un cryogel qui a été obtenu par refroidissement d'une solution aqueuse de poly(alcool de vinyle) ou d'au moins un polysaccharide formant un gel choisi dans le groupe constitué par l'agarose, la gélose, les carragénines, l'amidon et la cellulose ainsi que leurs dérivés respectifs ou d'un mélange desdits polysaccharides à une température à laquelle le solvant présent dans le système est partiellement congelé avec les substances dissoutes concentrées dans la fraction non congelée du solvant jusqu'à la formation d'un cryogel, ledit refroidissement étant réalisé, si nécessaire, en présence d'au moins un agent chaotropique dans ladite solution aqueuse afin d'éviter la gélification avant que la solution de polymère soit congelée.

4. Méthode selon l'une quelconque des revendications 2 et 3, dans laquelle le polymère et le polysaccharide ont respectivement subi une réticulation.

5. Méthode selon l'une quelconque des revendications 2 à 4, dans laquelle le polymère et le polysaccharide ont respectivement été modifiés en y introduisant un élément choisi dans le groupe constitué par les ligands, les groupes chargés et les groupes hydrophobes.

6. Méthode selon l'une quelconque des revendications 2 à 5, dans laquelle le monolithe a été formé en enroulant ou en repliant une feuille d'un cryogel.

7. Méthode selon la revendication 1, dans laquelle le monolithe d'un gel macroporeux compressible a été produit par une méthode choisie dans le groupe constitué par:
la gélification dans des systèmes à double émulsion;
la lyophilisation d'une solution de polymère;
la lixiviation d'un matériau particulaire utilisé comme porogène à partir d'un monolithe de polymère préformé;
l'utilisation de bulles de gaz comme porogène lorsque la gélification se déroule dans une mousse; et
l'agrégation de particules ou de fibres de polymère (matériaux non tissés).

8. Dispositif de séparation à utiliser dans une méthode pour la séparation chromatographique de substances contenues dans un échantillon liquide selon la revendication 1, lequel dispositif de séparation comprend un plateau de séparation d'une seule pièce ayant un réseau espacé de chambres droites, identiques, distinctes, présentant chacune une extrémité supérieure ouverte et une extrémité inférieure ouverte, et un milieu de séparation placé dans au moins une partie de chaque chambre droite, dans lequel
ledit milieu de séparation comprend un monolithe d'un gel macroporeux compressible ayant, dans son état non compressé gonflé au liquide, une aire de section transversale qui est de 2-15 %, de préférence, 4-12 %, et plus préférablement, 5-10 %, plus grande que l'aire de section transversale de la chambre droite dans laquelle il est placé, lequel monolithe est en contact face-à-face avec la paroi de la chambre respective dans son état gonflé au liquide.

9. Dispositif de séparation selon la revendication 8, dans lequel le monolithe est tel que défini dans l'une quelconque des revendications 2 à 7.

10. Procédé pour la préparation d'un milieu de séparation destiné à être utilisé dans une méthode telle que revendiquée dans l'une quelconque des revendications 1 à 5, lequel procédé comprend les étapes consistant à:
a) se procurer un moule en matériau rigide ayant une pluralité d'ouvertures qui vont de part en part, lesdites ouvertures ayant une configuration de la section transversale adaptée à celle des chambres droites d'un plateau de séparation dans lequel le milieu de séparation préparé doit être utilisé, mais ayant une aire de section transversale qui est de 2-15 %, de préférence, 4-12 %, et plus préférablement, 5-10 %, plus grande que celle desdites chambres droites;
b) fermer hermétiquement les ouvertures du moule dans sa partie inférieure au moyen d'une plaque amovible imperméable;
c) introduire une solution de substances à partir desquelles les cryogels peuvent être préparés, dans les ouvertures du moule;
d) refroidir le moule avec ladite solution dans ses ouvertures à une température en dessous du point de cristallisation du solvant, à laquelle le solvant présent dans le système est partiellement congelé avec les substances dissoutes concentrées dans la fraction non congelée du solvant jusqu'à la formation d'un monolithe cryogel;
e) décongelé le moule avec les monolithes cryogels qui s'y trouvent;
f) remplacer la plaque amovible imperméable par un filet ayant des ouvertures suffisamment larges pour permettre un écoulement libre des liquides à travers celui-ci, mais suffisamment petites pour empêcher les monolithes cryogels formés de passer à travers;
g) laver les monolithes en utilisant un milieu de lavage approprié; et
h) enlever les monolithes du moule.

11. Procédé selon la revendication 10, dans lequel les étapes e) et f) sont réalisées dans l'ordre inverse.

12. Procédé selon l'une quelconque des revendications 10 et 11, dans lequel ladite solution utilisée dans l'étape c) est une solution d'un ou de plusieurs monomères choisis dans le groupe constitué par:
les (méth)acrylamides N-substitués et non substitués;
les N-vinylamides N-alkyl-substitués;
les (méth)acrylates d'hydroxyalkyle;
l'acétate de vinyle;
les éthers alkyliques d'alcool de vinyle;
le styrène et les dérivés de styrène à substitution cyclique;
les monomères vinyliques;
l'acide (méth)acrylique et ses sels;
l'acide silicique; et les monomères capables de former des polymères par polycondensation.

13. Procédé selon l'une quelconque des revendications 10 et 11, dans lequel ladite solution utilisée dans l'étape c) est une solution aqueuse de poly(alcool de vinyle) ou d'au moins un polysaccharide formant un gel, choisi dans le groupe constitué par l'agarose, la gélose, les carragénines, l'amidon et la cellulose ainsi que leurs dérivés respectifs, ou d'un mélange desdits polysaccharides en présence, si nécessaire, d'au moins un agent chaotropique dans ladite solution aqueuse afin d'éviter la gélification avant que la solution de polymère soit congelée.

14. Procédé selon l'une quelconque des revendications 10 à 13, dans lequel les monolithes cryogels font l'objet d'une ou de plusieurs modifications chimiques avant l'étape h).

15. Procédé selon la revendication 14, dans lequel les monolithes cryogels sont soumis à une réaction de réticulation.

16. Procédé selon la revendication 14, dans lequel les monolithes cryogels sont modifiés en y introduisant un élément choisi dans le groupe constitué par les ligands, les groupes chargés et les groupes hydrophobes.

17. Procédé pour la préparation d'un milieu de séparation destiné à être utilisé dans une méthode telle que revendiquée dans l'une quelconque des revendications 1 à 5, lequel procédé comprend les étapes consistant à:
a) se procurer un moule tubulaire allongé ayant une extrémité fermée et une configuration de la section transversale adaptée à celle des chambres droites d'un plateau de séparation dans lequel le milieu de séparation préparé doit être utilisé, mais ayant une aire de section transversale qui est de 2-15 %, de préférence, 4-12 %, et plus préférablement, 5-10 %, plus grande que celle desdites chambres droites;
b) introduire dans le moule une solution de substances à partir desquelles les cryogels peuvent être préparés;
c) refroidir le moule avec ladite solution qui s'y trouve à une température en dessous du point de cristallisation du solvant, à laquelle le solvant présent dans le système est partiellement congelé avec les substances dissoutes concentrées dans la fraction non congelée du solvant jusqu'à la formation d'un monolithe cryogel;
d) décongeler le moule avec le monolithe cryogel qui s'y trouve;
e) retirer l'extrémité fermée du moule;
f) laver le monolithe en faisant passer un milieu de lavage approprié à travers le moule;
g) enlever le monolithe du moule; et
h) découper le monolithe en morceaux ayant une taille appropriée pour une utilisation dans une chambre droite d'un plateau de séparation.

18. Procédé pour la préparation d'un milieu de séparation destiné à être utilisé dans une méthode telle que revendiquée dans l'une quelconque des revendications 1 à 5, lequel procédé comprend:
a) l'extrusion d'une solution de substances à partir desquelles les cryogels peuvent être préparés directement dans un milieu organique froid qui est un non-solvant pour les solutés de ladite solution jusqu'à la formation d'un cordon continu ayant une section transversale sensiblement uniforme dans lequel la gélification a lieu; et
b) découper le cordon en morceaux ayant une taille appropriée pour une utilisation dans une chambre droite d'un plateau de séparation.
